# EUROPÄISCHE PATENTANMELDUNG

(11) **EP 1 213 670 A1**
(43) Veröffentlichungstag der Anmeldung: **12.06.2002**
(21) Anmeldenummer: 00127071.9
(22) Anmeldetag: 11.12.2000
(51) Int. Cl.: G06F 17/60

(54) **Verfahren zum Überwachen der Kursentwicklung eines Wertpapiers**

(71) Anmelder: financialbot.com GmbH, 40549 Düsseldorf (DE)
(72) Erfinder: Dölle, Hans-Peter, 40667 Meerbusch (DE)
(74) Vertreter: Cohausz & Florack

(57) **Zusammenfassung**

Die Erfindung betrifft ein Verfahren, ein EDV-System und ein Computer-Programm zum Überwachen der Kursentwicklung eines Wertpapiers,
a) bei dem mit Hilfe eines Computers von einem Benutzer Limitinformationen für ein oberes Limit und ein unteres Limit eingegeben werden,
b) bei dem vom Computer der aktuelle Kurs des Wertpapiers ermittelt wird,
c) bei dem der aktuelle Kurs als Basiskurs gesetzt wird und ausgehend vom Basiskurs anhand der Limitinformationen das obere Limit und das untere Limit berechnet werden,
d) bei dem fortlaufend der aktuelle Kurs des Wertpapiers ermittelt und mit dem oberen Limit und unteren Limit verglichen wird,
e) bei dem vom Computer dann, wenn der aktuelle Kurs das obere Limit überschreitet oder das untere Limit unterschreitet, dem Benutzer eine Nachricht über die entsprechende Kursveränderung zugesandt wird und das Verfahren mit dem Schritt c) fortgesetzt wird.

## Beschreibung

Die Erfindung betrifft ein Verfahren zum Überwachen der Kursentwicklung eines Wertpapiers.

Für einen aktiven Handel mit Wertpapieren wie beispielsweise Aktien ist es erforderlich, die aktuellen Kursentwicklungen in kurzen Zeitabständen zu überprüfen, um auf entstehende Marktentwicklungen reagieren zu können. Wichtig ist dabei in der Regel nur, die Tendenz zu erfassen und die Limits zu kontrollieren, die vom Wertpapierbesitzer und Benutzer des Verfahrens vorgegeben worden sind.

Außer bei den Personen, die sich professionell und andauernd mit der Aktienentwicklung auseinandersetzen, besteht bei Personen mit einer anderen beruflichen oder privaten Beschäftigung das Problem der laufenden Überwachung der Kursentwicklung.

Es gibt im Stand der Technik ein Verfahren, bei dem vom Benutzer das obere Limit und das untere Limit zum aktuellen Kurs eingegeben werden und bei dem dann, wenn der Kurs des Wertpapiers eines der beiden Limits erreicht hat, eine entsprechende Nachricht übermittelt wird. Der Benutzer muß dann erneut in das Verfahren eingreifen, da er nach Erreichen eines der beiden Limits neue Limits eingeben muß, die nachfolgend überwacht werden.

Somit wird der Benutzer entweder zu einem häufigen Eingreifen in das Verfahren gezwungen, oder der Benutzer setzt die Limitabstände zum aktuellen Kurs des Wertpapiers so groß, daß er nicht mehr so häufig benachrichtigt wird. Dann kann aber nur noch eine ungenaue Überwachung der Kursentwicklung erfolgen.

Der Erfindung liegt daher das technische Problem zugrunde, das bekannte Verfahren zu verbessern und eine komfortablere und zugleich flexiblere Überwachung des Kurses eines Wertpapiers zu ermöglichen.

Das zuvor aufgezeigte technische Problem wird erfindungsgemäß durch ein Verfahren mit den Merkmalen des Anspruches 1 gelöst, bei dem mit Hilfe eines Computers von einem Benutzer zunächst Limitinformationen für ein oberes Limit und ein unteres Limit eingegeben werden und bei dem vom Computer der aktuelle Kurs des Wertpapiers ermittelt wird. Der Kurs wird dann als Basiskurs festgelegt, mit dem dann unter Anwendung der Limitinformationen das obere Limit und das untere Limit berechnet werden. Fortlaufend wird dann der aktuelle Kurs des Wertpapiers ermittelt und mit dem oberen Limit und unteren Limit verglichen. Dann, wenn der aktuelle Kurs das obere Limit überschreitet oder das untere Limit unterschreitet, wird vom Computer einerseits dem Benutzer eine Nachricht über die entsprechende Kursveränderung zugesandt und andererseits das Verfahren mit der erneuten Festlegung des Basiskurses und der daran angepaßten Limits fortgesetzt.

Erfindungsgemäß wird also nach jedem Erreichen eines der beiden Limits der Benutzer darüber informiert und das Verfahren wird automatisch mit dem neuen Basiskurs und neuen Limits fortgesetzt, ohne daß der Benutzer erneut in den Ablauf des Verfahrens eingreifen muß. Der Benutzer kann dann entscheiden, ob er ein Wertpapier verkauft oder kauft oder ob er die Limitinformationen ändern will. Er kann aber auch die Nachricht lediglich zur Kenntnis nehmen und das Verfahren weiter ablaufen lassen, ohne selber einzugreifen.

Werden die Limitinformationen so gewählt, daß die Limits nur gering vom Basiskurs abweichen, dann ist ein häufiges Benachrichten durch das Verfahren zu erwarten. Da jedoch der Benutzer die Nachrichten nur zur Kenntnis nehmen muß, ohne selber aktiv in den Verfahrensablauf einzugreifen, werden die häufigen Benachrichtigungen nicht als lästig empfunden. Werden dagegen die Limits mit einem relativ großen Abstand zum Basiskurs gewählt, dann werden nicht so häufig Nachrichten versandt. Die zugrundeliegende Strategie ist daher eher langfristig angelegt. Auf jeden Fall wird der Benutzer durch den Computer über die Tendenz der Kursentwicklung regelmäßig informiert.

Die vom Computer erzeugten Nachrichten werden bevorzugt elektronisch als automatischer Anruf, als Kurznachricht (SMS) auf ein mobiles Telefon, als elektronische Nachricht (email) und/oder als Fax versendet. Somit kann die ständige Erreichbarkeit mit elektronischen Kommunikationsgeräten für die Durchführung des Verfahrens ausgenutzt werden.

Die Limitinformationen können vom Benutzer in verschiedener Weise eingegeben werden, um anschließend zur Berechnung der Limits verwendet zu werden. Dabei kann zum einen die Limitinformation aus einem Wert bestehen, der sowohl für die Berechnung des oberen Limits als auch des unteren Limits verwendet wird. Zum anderen können die Limitinformationen aus zwei Werten bestehen, die separat für die Berechnung der beiden Limits angewendet werden können.

Bei einer bevorzugten Ausgestaltung werden die Limitinformationen jeweils als prozentualer Wert eingegeben, der auf den Basiskurs angewendet wird, um das obere Limit zu berechnen. Ebenso wird mit dem Prozentualwert das untere Limit berechnet.

Eine weitere Ausgestaltung der Erfindung besteht darin, daß die Limitinformationen vom Benutzer als absoluter Wert eingegeben wird. Dann werden durch Addieren bzw. Subtrahieren des absoluten Wertes das obere und untere Limit berechnet. Ebenso können die beiden Limits selbst als Limitinformationen eingegeben werden, aus denen dann die Differenzen zum aktuellen Kurs des Wertpapiers absolut oder prozentual berechnet werden. Die Differenzen werden dann beim weiteren Ablauf des Verfahrens zur jeweiligen Berechnung der neuen Limits herangezogen.

Bei einer weiteren Ausgestaltung der Erfindung werden vom Benutzer Werte für ein Kauflimit und ein Verkauflimit eingegeben. Dann, wenn der aktuelle Kurs das Kauflimit oder das Verkauflimit erreicht hat, wird dem Benutzer eine Kaufnachricht oder eine Verkaufnachricht zugesandt. Somit kann der Benutzer mit Hilfe des Verfahrens nicht nur die Tendenz der Kursentwicklung erfahren, sondern er kann auch rechtzeitig über das Erreichen des eigenen Kauflimits oder Verkauflimits informiert werden. Somit wird der Benutzer, auch wenn er sich nicht ständig mit dem Kursgeschehen beschäftigen kann, über für ihn wichtige Kursschwankungen informiert.

Bei einer weiteren vorteilhaften Ausgestaltung der vorliegenden Erfindung wird ein gleitender Durchschnitt über eine vergangene Zeitdauer von einer vorgegebenen Anzal von Zahlen gebildet. Die entsprechenden Kurven werden als 32-Tage- oder 200-Tage-Linie in den graphischen Darstellungen der zeitlichen Verläufe der Kursentwicklungen bezeichnet. Die gleitenden Durchschnitte geben im Vergleich zum eigentlichen Kursverlauf mittel- bis langfristige Informationen über den Kursverlauf. Beim dargestellten Verfahren wird dann, wenn der aktuelle Kurs den aktuellen Wert des gleitenden Durchschnitts über- oder unterschreitet, dem Benutzer eine entsprechende Nachricht zugesandt. Somit erhält der Benutzer zeitnah die Information, daß sich der mittel- oder langfristige Kursverlauf verändert hat. Auch diese Information kann der Benutzer für eine Kauf- oder Verkaufsentscheidung nutzen.

Das oben aufgezeigte technische Problem wird auch durch ein EDV-System zum Überwachen der Kursentwicklung eines Wertpapiers zur Verwirklichung des erfindungsgemäßen Verfahrens und durch ein Computer-Programm zum Überwachen der Kursentwicklung eines Wertpapiers mit Programmbefehlen für ein EDV-System zur Verwirklichung des erfindungsgemäßen Verfahrens gelöst.

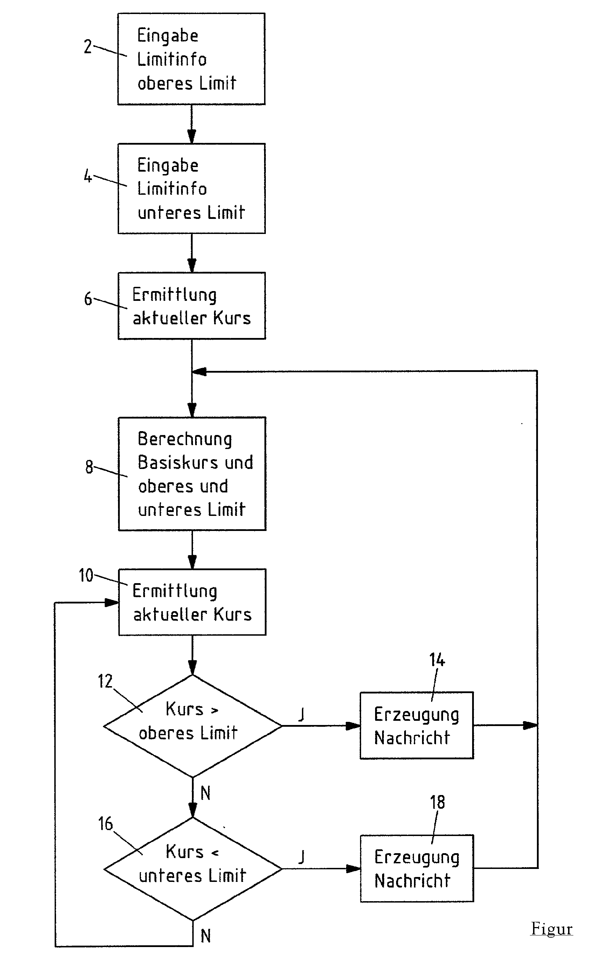

Die Erfindung wird im folgenden anhand von Ausführungsbeispielen näher erläutert, wobei auf die beigefügte Zeichnung bezug genommen wird. In der Zeichnung zeigt die einzige Figur ein Ablaufdiagramm, das ein Ausführungsbeispiel des erfindungsgemäßen Verfahrens darstellt.

Im Schritt 2 wird vom Benutzer die Limitinformation für das obere Limit eingegeben, während im Schritt 4 die Limitinformation für das untere Limit eingegeben wird. Wie oben bereits ausgeführt worden ist, können beide Schritte 2 und 4 auch zusammengefaßt werden, indem für beide Limits der gleiche Wert einmal eingegeben wird.

Im Schritt 6 wird vom Computer der aktuelle Kurs des Wertpapiers ermittelt. Dieses geschieht durch eine Datenbankabfrage, wozu der Computer über eine Kommunikationsverbindung mit einem Datenbankserver verbunden wird. Die Daten können auch zentral auf dem Computer gespeichert sein, die regelmäßig aktualisiert werden.

Im Schritt 8 werden aus den Limitinformationen und dem aktuellen Kurs der Basiskurs und das obere Limit und das untere Limit berechnet. Diese Werte werden dann bei der nachfolgenden Überwachung der Kursentwicklung verwendet.

Im Schritt 10 wird dazu zunächst ein neuer aktueller Kurswert ermittelt, der dann mit dem oberen und gegebenenfalls mit dem unteren Limit verglichen wird.

Wird im Schritt 12 festgestellt, daß der aktuelle Kurs höher als das obere Limit liegt, dann wird vom Computer im Schritt 14 eine elektronische Nachricht in Form eines elektronischen Briefes (email), einer Kurznachricht (SMS) oder einem Fax erzeugt, die dann an den Benutzer gesendet wird. Ebenso kann die elektronische Nachricht mit einem automatischen Anrufsystem erzeugt werden, das mit einer vom Computer erzeugten Stimme die Mitteilung an den Benutzer telefonisch übermittelt.

Wird im Schritt 12 kein Überschreiten des oberen Limits festgestellt, so wird im Schritt 16 der aktuelle Kurs mit dem unteren Limit verglichen. Wird das untere Limit unterschritten, so wird vom Computer im Schritt 18 eine elektronische Nachricht erzeugt, die dann an den Benutzer gesendet wird.

Wird im Schritt 16 kein Unterschreiten des Kurswertes unterhalb des unteren Limits festgestellt, so wird keine Nachricht erzeugt und das Verfahren mit der Ermittlung eines neuen aktuellen Kurses im Schritt 10 fortgesetzt.

Ist dagegen eine Nachricht in den Schritten 14 oder 18 erzeugt und an den Benutzer übersandt worden, wurde also eines der beiden Limits über- oder unterschritten, so wird das Verfahren mit dem Schritt 8 fortgesetzt, indem aus dem zuvor ermittelten aktuellen Kurs ein neuer Basiskurs und anhand der anfangs eingegebenen Limitinformationen neue obere und untere Limits berechnet werden. Danach wird das zuvor beschriebene Verfahren mit den Schritten 12 bis 18 fortgesetzt.

Das Verfahren wird erst dann unterbrochen, wenn der Benutzer eingreift und entweder neue Limitinformationen eingibt oder den Ablauf des Verfahrens an sich stoppt.

Ein Zahlenbeispiel soll das erfindungsgemäße Verfahren im folgenden weiter erläutern.

Ein Benutzer will den Kurs eines Wertpapiers überwachen, das aktuell bei einem Kurs von 43 Währungseinheiten (WE) steht. Der Benutzer wünscht eine Benachrichtigung bei plus 15 %, also bei 49,5 WE, und bei minus 10 %, also bei 38,7 WE. Daher gibt der Benutzer die prozentualen Werte 15 und 10 für das obere Limit und das untere Limit zu Beginn des Verfahrens ein.

Entwickelt sich der Kurs des Wertpapiers nach oben, dann erreicht dieser zu einem bestimmten Zeitpunkt das obere Limit von 49,5 WE. Dann wird eine entsprechende Nachricht an den Benutzer abgesandt und der neue Basiskurs gleich 49,5 gesetzt. Daraus ergeben sich anhand der prozentualen Eingaben der Limitinformationen als oberes Limit 56,9 WE gleich plus 15 % und als unteres Limit 44,5 WE gleich minus 15 %. Das Verfahren wird dann mit diesen Werten fortgesetzt, bis erneut eines der beiden Limits vom Kurs des Wertpapiers erreicht wird.

Andererseits könnte der Benutzer bei dem anfänglichen Basiskurs von 43 WE auch absolute Werte, nämlich 47 und 40 für das obere und untere Limit eingeben. Diese Werte wiederum entsprechen den prozentualen Werten 9,3 % und 7,5 %. Wird das untere Limit durch den Kurs des Wertpapiers erreicht, dann werden der neue Basiskurs gleich 40 gesetzt, das obere Limit zu 43,7 gleich plus 9,3 % und das untere Limit zu 37,0 gleich minus 7,5 % gesetzt.

## Patentansprüche

1. Verfahren zum Überwachen der Kursentwicklung eines Wertpapiers,
a) bei dem mit Hilfe eines Computers von einem Benutzer Limitinformationen für ein oberes Limit und ein unteres Limit eingegeben werden,
b) bei dem vom Computer der aktuelle Kurs des Wertpapiers ermittelt wird,
c) bei dem der aktuelle Kurs als Basiskurs gesetzt wird und ausgehend vom Basiskurs anhand der Limitinformationen das obere Limit und das untere Limit berechnet werden,
d) bei dem fortlaufend der aktuelle Kurs des Wertpapiers ermittelt und mit dem oberen Limit und unteren Limit verglichen wird,
e) bei dem vom Computer dann, wenn der aktuelle Kurs das obere Limit überschreitet oder das untere Limit unterschreitet, dem Benutzer eine Nachricht über die entsprechende Kursveränderung zugesandt wird und das Verfahren mit dem Schritt c) fortgesetzt wird.

2. Verfahren nach Anspruch 1,
bei dem die Limitinformationen vom Benutzer als prozentuale Werte eingegeben werden.

3. Verfahren nach Anspruch 1,
bei dem die Limitinformationen vom Benutzer als absolute Werte eingegeben werden

4. Verfahren nach Anspruch 3,
bei dem aus den absoluten Werten prozentuale Limitinformationen abgeleitet werden.

5. Verfahren nach einem der Ansprüche 1 bis 4,
bei dem vom Benutzer Werte für ein Kauflimit und ein Verkauflimit eingegeben werden und
bei dem dann, wenn der aktuelle Kurs das Kauflimit oder das Verkauflimit erreicht hat, dem Benutzer eine Kaufnachricht oder eine Verkaufnachricht zugesandt wird.

6. Verfahren nach einem der Ansprüche 1 bis 5,
bei dem ein gleitender Durchschnitt über eine vorgegebene vergangene Zeitdauer gebildet wird und
bei dem dann, wenn der aktuelle Kurs den aktuellen Wert des gleitenden Durchschnitts über- oder unterschreitet, dem Benutzer eine entsprechende Nachricht zugesandt wird.

7. EDV-System zum Überwachen der Kursentwicklung eines Wertpapiers zur Verwirklichung eines Verfahrens nach einem der Ansprüche 1 bis 6.

8. Computer-Programm zum Überwachen der Kursentwicklung eines Wertpapiers mit Programmbefehlen für ein EDV-System zur Verwirklichung eines Verfahrens nach einem der Ansprüche 1 bis 6.

9. Computer-Programm nach Anspruch 8, gespeichert auf einem maschinenlesbaren Medium.
